# EUROPÄISCHE PATENTSCHRIFT

(11) **EP 2 214 858 B1**
(45) Veröffentlichungstag und Bekanntmachung des Hinweises auf die Patenterteilung: **10.09.2014**
(21) Anmeldenummer: 08848543.8
(22) Anmeldetag: 06.11.2008
(51) Int. Cl.: B23H 7/26

(54) **ANTRIEBSVORRICHTUNG FÜR ERODIERWERKZEUGE**
DRIVE DEVICE FOR EROSION TOOLS
DISPOSITIF D'ENTRAÎNEMENT POUR OUTILS D'ÉROSION

(30) Priorität: 08.11.2007 DE 102007054308
(43) Veröffentlichungstag der Anmeldung: 11.08.2010
(73) Patentinhaber: Fraunhofer-Gesellschaft zur Förderung der angewandten Forschung e.V., 80686 München (DE)
(72) Erfinder: NEUMANN, Frank, 63225 Langen (DE); LINNEBACH, Egbert, 63636 Brachttal (DE); KUNZ, Stefan, 55411 Bingen (DE)
(74) Vertreter: Mehler Achler
(86) Internationale Anmeldenummer: PCT/EP2008/065062
(87) Internationale Veröffentlichungsnummer: WO 2009/060031

(56) Entgegenhaltungen:
- EP-A- 0 707 916
- EP-A- 1 721 693
- WO-A-2006/092837
- US-A- 3 758 739

## Beschreibung

Die Erfindung betrifft eine Antriebsvorrichtung für Erodierwerkzeuge, insbesondere für die ECM- und EDM-Bearbeitung, vor allem für Mikrobearbeitungszwecke wie beispielsweise Mikrobohrungen. Die Antriebsvorrichtung weist eine Antriebswelle, einen mit der Antriebswelle verbundenen Elektrodenhalter, einen auf die Antriebswelle wirkenden Axialantrieb, einen als Direktantrieb berührungslos auf die Antriebswelle wirkenden Rotationsantrieb und ein Radiallager auf.

Eine derartige Vorrichtung ist aus der EP1721693 bekannt, welche den nächstliegenden Stand der Technik darstellt.

Im Bereich der elektroerosiven Bearbeitung insbesondere kleinster Strukturen (Mikro-Funkenerosion) tritt vermehrt das Problem auf, dass hohe Aspektverhältnisse angestrebt werden. Das heißt, das geforderte Verhältnis aus der Strukturtiefe zu (kleinster) lateraler Ausdehnung ist oftmals sehr groß (10 oder mehr). Dabei ergibt sich mit zunehmender Erosionstiefe das Problem, dass sich wegen abnehmender Dielektrikumsumwälzung im Bohrungsgrund Abtragspartikel ansammeln, die dann einen definierten Funkenüberschlag behindert. Dies bewirkt neben einer Verlangsamung des Bohrungsprozesses auch einen verstärkten Elektrodenverschleiß und eine Beeinträchtigung der Strukturgenauigkeit der Vertiefung. Um dem entgegen zu wirken, werden in der Literatur unterschiedliche Wege verfolgt.

Beispielsweise schlägt die DE 303 26 04 vor, zum Herstellen von Bohrungen rohrförmige Hohlelektroden einzusetzen, durch deren Inneres das Dielektrikum dem Bohrungsgrund unter Druck zugeführt wird. Diesem Verfahren der Druckspülung durch Hohlelektroden sind jedoch mit abnehmenden Bohrungsdurchmesser Grenzen gesetzt. Bei Elektrodeninnendurchmessern, die kleiner als 70 µm sind, wird der Druckverlust über die Elektrodenlänge so hoch, dass praktisch kein

Dielektrikum mehr hindurchgefördert werden kann. Eine Druckspülung ist in diesem Fall ausgeschlossen.

In der DE 303 26 04 wird vorgeschlagen, die Druckspülung mittels einer hoch- oder niederfrequenten Schwingungserregung der Elektrode zu unterstützen. Eine Vibration der Elektrode kann prozessunterstützend wirken, indem sie das Dielektrikum im Arbeitsspalt in Bewegung und so die Abtragspartikel in der Schwebe hält. Um kleinste Strukturen bis unter 10 µm mit größtmöglicher Genauigkeit zu fertigen, sind jedoch höchste Ansprüche an die Antriebsvorrichtung zu stellen. Hier gibt es noch ein erhebliches Verbesserungspotenzial.

Aus der FR 257 71 56 ist bekannt, eine Schwingungsbewegung in Vorschubrichtung der Elektrode mit einer Rotationsbewegung der Elektrode um deren Längsachse zu überlagern. Hiervon verspricht man sich eine nochmals verbesserte Wirkung. Jedoch ist auch die aus dieser Druckschrift bekannte Antriebsvorrichtung insbesondere hinsichtlich des Schwingungsantriebes und der Führungseinheit nicht präzise genug, um Strukturen kleinster Abmessungen zu erzeugen. Ein Konus auf der Oberseite der Vorrichtung schafft die Verbindung zu einem externen Rotationsantrieb. Der axial wirkende Linearantrieb erfolgt mittels einer Tauchspule, wobei die Antriebswelle eine Kupplung in Form von Federelementen aufweist, um einerseits die Drehbewegung zu übertragen und andererseits einen Freiheitsgrad für die Axialschwingung zu schaffen. Der starre Teil der Antriebswelle ist mittels Rillenkugellager und der axial bewegliche Teil mittels eines Gleitlagers radial gegen ein Gehäuse abgestützt.

Da die vorliegende Vorrichtung insbesondere für die Mikrobearbeitung geeignet sein soll, sind hohe Anforderungen an die Rundlaufgenauigkeit gestellt. Rundlauftoleranzen im Submikrometerbereich lassen sich jedoch mit der Vorrichtung gemäß FR 257 71 56 mangels Präzision der Führungs- und Antriebskomponenten nicht erzielen.

Aus der JP 306 09 28 und der JP 602 55 323 sind Antriebsvorrichtungen für Erodierwerkzeuge bekannt, welche mehrere Piezo-Aktoren aufweisen, mittels derer man einen Elektrodenhalter samt Elektrode in allen drei Raumrichtungen verstellen und im Fall der JP 602 55 323 insbesondere verkippen kann. Durch die Kippung kann eine etwaige Neigung der Elektrode gegenüber der Vorschubrichtung korrigiert werden. Die JP 306 09 28 schlägt vor den Piezo-Antrieb prozessunterstützend zu nutzen, indem die Elektrode hierdurch in Vorschubrichtung hin und her bewegt wird. Zum genauen Aufbau insbesondere der Führungseinheit mit dem Ziel höchster Präzision ist nichts ausgesagt.

Die EP 0 636 443 hat zum Ziel, die Erosionsbedingungen zu verbessern, indem ein Elektrodenhalter mit hochfrequenten Mikroschwingungen beaufschlagt wird, deren Amplituden kleiner sind als der Funkenspalt am Bohrungsgrund. Hierzu werden vorzugsweise ebenfalls Piezo-Aktoren eingesetzt, welche auf einen elastischen, metallischen Block einwirken. Das System ist für einen Betrieb in Resonanz ausgelegt. Eine achsparallele Bewegung der Elektrode ist aufgrund dessen und aufgrund des aus der Druckschrift ersichtlichen Führungsprinzips nicht garantiert.

In der DE 2811274 A1 ist eine Vorrichtung zum Steuern der Elektrode an einer Funkenerosionsmaschine mit verstellbarer Exzentrizität des Elektrodenhalters offenbart. Der Elektrodenhalter steht mit einer Welle in Verbindung, welche außenumfänglich über eine Büchse und eine Kugelbüchse in einem Gehäuse der Vorrichtung gelagert ist.

Der DE 1237713 B ist eine Antriebsvorrichtung für eine Erosionselektrode zu entnehmen, bei der ein Antriebsstößel mittels einer Leitspindel in axialer Richtung hin und her bewegt und gleichzeitig durch Abgreifen einer Spiralbahn in einer Nockenhülse um die Längsachse gedreht wird. Der Antriebsstößel ist in einem Gestell mittels zweier Kugellagerbüchsen gelagert, die die überlagerte Axial-Drehbewegung erlauben.

Die CH 350735 A befasst sich mit einer Halterungs- und Antriebsvorrichtung für Erodierwerkzeuge, welche um eine Achse drehbar und in axialer Richtung verschiebbar angeordnet ist. Die Führung in axialer Richtung wird mittels zweier paralleler Führungsrohre verwirklicht, in denen jeweils ein Innenrohr gelagert ist, wobei sich zwischen dem Führungsrohr und dem Innenrohr jeweils ein Käfig mit Kugeln zur praktisch spiel- und reibungsfreien Lagerung des Innenrohres befinden. Die beiden Innenrohre sind über einen Mitnehmerarm miteinander starr verbunden. In einem Innenrohr befindet sich eine Antriebswelle für die Elektrodenhalterung, welche darin mittels eines Nadellagers und zweier sowohl Axial- als auch Radialkräfte aufnehmende Kugellager drehbar gelagert ist.

Aus der EP 0 264 147 sind wiederum Vorrichtungen zur Feinverstellung mittels Piezo-Aktoren bekannt. Diese sind in elastische monolithische Blöcke eingefasst, die Bewegungen in mehreren Dimensionen erlauben. Die Anwendung und Umsetzung solcher Stellantriebe als Antriebsvorrichtung für Erodierwerkzeuge wird jedoch nicht näher untersucht. Zwar erlauben solche Systeme eine exakte Axialführung. Ihre Herstellung ist jedoch sehr aufwendig und eine kostengünstige Serienfertigung nicht möglich.

Ein anderes Antriebs- und Lagerkonzept ist in der EP 1 473 103 A1 offenbart. Sämtliche Lager- und Stellantriebe erfolgen hiernach elektromagnetisch. Gemäß einem Ausführungsbeispiel sind zwei axial beabstandete, elektromagnetische Stellantriebe für eine radiale Spindelverstellung (x-y-Verstellung) vorgesehen. Ferner gibt es zwei axial wirkende Stellantriebe (z-Verstellung) für die Spindel, mit welchen auch eine axiale Vibration erzeugt werden kann. Außerdem ist ein direkt auf die Spindel wirkender, elektromagnetischer Rotationsantrieb vorgesehen. Schließlich sind zwei axial beabstandete elektromagnetische Hilfslager vorgesehen, welche den Hub der radialen Spindelverstellung begrenzen. Diese Antriebsvorrichtung vereint erstmals die eingangs genannten Merkmale.

Zwar werden aufgrund der berührungslosen elektromagnetischen Aktoren einige Probleme bekannter Antriebskonzepte, insbesondere solcher mit extern angekoppeltem Rotationsantrieb, durch welchen in der Regel unerwünschte Querkräfte in die Antriebsvorrichtung eingeleitet werden, beseitigt. Jedoch erlaubt das offenbarte Lagerprinzip der Spindel, dass sich radiale Schwingungsmoden auf der Spindel ausbilden, welche der erforderlichen Präzision abträglich sind.

Aufgabe der Erfindung ist es, eine Antriebsvorrichtung für Erodierwerkzeuge zu schaffen, welche zur Erlangung einer guten Spülung des Bohrungsspaltes und damit einer hohen Güte der Bohrung auch bei großen Aspektverhältnissen eine Drehbewegung mit einer Axialbewegung überlagert. Aufgabe ist es ferner bei einer solchen Vorrichtung dafür Sorge zu tragen, dass sämtliche Bewegungen mit einer hohen Präzision ausgeführt werden, um den Einsatz zur Mikrobearbeitung zu ermöglichen. Schließlich soll die erfindungsgemäße Vorrichtung kostengünstig sein.

Die Aufgabe wird durch eine Antriebsvorrichtung mit den Merkmalen des Patentanspruchs 1 gelost.

Efindungsgemäß ist das Radiallager bei einer Antriebsvorrichtung der eingangs genannten Art in Form einer Kugelführung ausgebildet, wobei der Axialantrieb die Kugelführung zumindestens in einem Axialabschnitt umgibt.

Während die im übrigen Stand der Technik eingesetzten Radiallager in Form von Rillenkugellagern keinen axialen Freiheitsgrad haben und deshalb auf meist konstruktiv aufwendige Weise die überlagerten Axial- und Radialbewegungen entkoppeln müssen, erlaubt der erfindungsgemäße Einsatz einer Kugelführung eine gleichzeitige Axialbewegung (Translation) und Drehbewegung (Rotation) der gelagerten Welle. Die Antriebswelle kann deshalb ohne Kupplung und damit in einem Stück ausgebildet werden. Die Vorteile eines Direktantriebs, der ebenfalls eine einstückig durchgehende, getriebefreie Welle ermöglicht und im Gegensatz zu einem angeflanschten Motor keine eigene Lagerung benötigt, können erst in Kombination mit der erfindungsgemäß eingesetzten Kugelführung voll ausgeschöpft werden, weil erst hierdurch die Anzahl der Radiallagerungen auf eine einzige minimiert wird.

Trotz der mehreren Freiheitsgrade gewährleistet die erfindungsgemäße Verwendung einer hochgenauen Kugelführung in einer Antriebsvorrichtung der gattungsgemäßen Art darüber hinaus überraschenderweise eine höhere Präzision der Linear- und Drehbewegung als die üblicherweise eingesetzten Rillenkugellager und auch als magnetische Lager. Verantwortlich hierfür ist die erfindungsgemäße Bauform der Kugelführung, welche einen Kugelkäfig mit mehreren Kugelreihen, vorzugsweise Reihen umfänglich versetzt angeordneter Kugeln, aufweist. Als Kugelreihe werden alle in einer Ebene senkrecht zur Wellenachse angeordnete Kugeln bezeichnet. Die Kugeln einer Kugelreihe sind bevorzugt mit einer gleichmäßigen (symmetrischen) Winkelverteilung angeordnet. Der umfängliche Versatz kann sich beispielsweise aus einer Verdrehung zweier benachbarter Kugelreihen mit gleicher Anzahl und gleichem Winkelabstand der Kugeln ergeben, was zu einer hohen Kugeldichte führt und damit die beste Annäherung an eine Flächenlagerung bietet, oder durch Kugelreihen mit unterschiedlicher Anzahl an Kugeln ergeben.

Gemäß einer Ausführungsform der erfindungsgemäßen Antriebsvorrichtung ist das Radiallager so ausgebildet, dass zu jeder Kugel in dem Kugelkäfig auf der radial gegenüberliegenden Seite der Antriebswelle eine Kugel angeordnet ist. Dies bedingt eine gerade Anzahl von Kugeln in jeder Axialebene, in der sich eine Reihe von Kugeln befindet. Auf diese Weise ist die Welle stets symmetrisch von beiden Seiten abgestützt, wodurch die Spielfreiheit verbessert wird. Alternativ oder zusätzlich können Kugelreihen vorgesehen sein, die eine ungerade Anzahl von Kugeln aufweisen, die in einer regelmäßigen Teilung um den Wellenumfang angeordnet sind. Beispielsweise können 3 Kugeln in einer Axialebene mit einer Teilung von jeweils 120° symmetrisch angeordnet sein. Insbesondere können sich Kugelreihen mit einer ungeraden Anzahl von Kugeln und solche mit einer geraden Anzahl von Kugeln abwechseln.

Die mehreren Reihen umfänglich versetzt angeordneter Kugeln bilden eine Vielzahl von Wellenabstützungen über einen lang gestreckten Axialabschnitt und kommen damit einer Flächenlagerung erheblich näher als Rillenkugellager oder die bekannten Magnetlager mit zwei axial beabstandeten punkt- bzw. linienförmigen Wellenabstützungen, zwischen welchen eine Durchbiegung der Welle nicht vermieden werden kann. Dies kann Taumelfehler und überhöhte Rundlauftoleranzen zur Folge haben, insbesondere, wenn die Welle aufgrund störender Antriebskräfte mit ihrer Resonanzfrequenz angeregt wird.

Ein weiterer Vorteil der erfindungsgemäßen Verwendung einer Kugelführung liegt darin, dass im Gegensatz zu der Verwendung zweier axial beabstandeter Rillenkugellager nur eine Lagerbohrung benötigt wird. Diese kann fertigungstechnisch einfacher und kostengünstiger hergestellt werden als zwei beabstandete Bohrungen, die präzise koaxial zueinander ausgerichtet werden müssen.

In einer besonders kompakten Bauform liegen die Kugeln einerseits direkt an dem Innenumfang einer Lagerbohrung in einem Gehäuse der Antriebsvorrichtung und andererseits direkt an der Antriebswelle an. Der radiale Platzbedarf der Kugelführung ist dann nicht größer als der Durchmesser der Kugeln. Diese Bauform stellt hohe Ansprüche an die Bearbeitungsgenauigkeit der Lagerbohrung und der Welle. Die Bearbeitungsgenauigkeit schließt sowohl die Oberflächengüte als auch die Maßhaltigkeit der Lagerelemente ein. Durch die hohe Maßhaltigkeit kann die Kugelführung vorzugsweise so vorgespannt werden, dass eine hinreichende Spielfreiheit bei hinreichender Leichtgängigkeit erzielt wird.

Eine bevorzugte Ausführungsform sieht vor, dass die Kugelführung eine Buchse aufweist, an deren Innenumfang die Kugeln anliegen.

Die Buchse kann auf einfache Weise in eine Aufnahmebohrung in einem Gehäuse der Antriebsvorrichtung eingesetzt werden. Die erforderliche hohe Führungsgenauigkeit sowohl für die Hubbewegungen als auch die Drehbewegungen wird durch hohe Bearbeitungsgenauigkeit der innenumfänglichen Laufflächen der Buchse sowie durch Verwendung von Kugeln, bevorzugt Stahlkugeln, hoher Güte und Maßgenauigkeit erzielt. Die Buchse kann zudem für eine bessere Dauerbelastbarkeit gehärtet sein.

Besonders bevorzugt liegen die Kugeln der Kugelführung auch bei dieser Ausführungsform am Außenumfang der Antriebswelle an. Hierbei ist darauf zu achten, dass eine hohe Genauigkeit der Rundheit und Zylindrizität der Lauffläche auf der Welle eingehalten wird. Die erfindungsgemäße Bauform des Radiallagers ist verglichen mit den bekanntermaßen eingesetzten Rillenkugellagern mit Innen- und Außenring sehr kompakt, da gemäß der bevorzugten Ausführungsform auf einen Innenring verzichtet werden kann und der Außenring funktional durch die Buchse ersetzt wird, welche aufgrund fehlender Profilierung jedoch ebenfalls flacher ausgebildet werden kann.

Der Kugelkäfig ist vorteilhafterweise aus Kunststoff gebildet.

Solche Kugelkäfige sind beispielsweise aus der US 4,136,915 A bekannt. Die Verwendung von Kunststoff minimiert den Abrieb zwischen den bewegten Teilen und somit den Verschleiß, wodurch die hohe Präzision über einen langen Zeitraum erhalten bleibt.

Als Direktantrieb wird vorzugsweise ein Synchronmotor eingesetzt, wobei die Antriebswelle bevorzugt durch Permanentmagnete konstant magnetisiert ist. Besonders bevorzugt ist der Direktantrieb als Torquemotor ausgebildet.

Auf diese Weise wird eine berührungslose und somit querkraft- und reibungsfreie Drehmomentübertragung für diesen motorischen Antrieb der Welle bereitgestellt, welche die Schwingungsneigung und damit Taumelfehler weiter vermindert.

Der Rotationsantrieb ist vorzugsweise für eine Rotationsgeschwindigkeit von 0 bis 3000 Umdrehungen pro Minute, besonders bevorzugt von 500 bis 1500 Umdrehungen pro Minute ausgelegt.

Der Axialantrieb ist vorzugsweise ringförmig, die Antriebswelle umgebend ausgebildet.

Aufgrund des freien inneren Durchgangs ist eine rotationssymmetrische Anordnung möglich, wodurch die Kräfte des Axialantriebs keine Kippmomente auf die Antriebswelle bewirken. Auch hierdurch wird die Präzisierung der Wellenbewegung optimiert und die erforderlichen Rundlauftoleranzen von 1 µm oder weniger zur erosiven Herstellung feinster Strukturen, insbesondere Bohrungen, erzielt.

Hinsichtlich einer kompakten Bauweise werden der Axialantrieb und die Kugelführung so angeordnet, dass der Axialantrieb die Kugelführung zumindest in einem Axialabschnitt umgibt.

Gerade durch die radial kompakte Bauform der Kugelführung wird so eine Antriebsvorrichtung möglich, welche auch in axialer Erstreckungsrichtung sehr kompakt ist. Durch die Kompaktheit werden die Einsatzmöglichkeiten erhöht. Beispielsweise ist eine solche erfindungsgemäße Antriebsvorrichtung für den Einsatz als flexibles Zusatzgerät in Gelenkarmrobotern geeignet, um beispielsweise Mikrobohrungen in großen Bauteilen wie Turbinenschaufeln, Flugzeugtriebwerken oder dergleichen einzubringen. Eine solche Anwendung ist bislang unbekannt und unmöglich. Vor allem durch eine Verkürzung der Antriebswelle kann deren Resonanzfrequenz angehoben und Schwingungsamplitude herabgesetzt werden, was abermals die Rundlaufpräzision und Taumelfreiheit verbessert.

Der Axialantrieb ist bevorzugt ein Piezo-Antrieb. Besonders bevorzugt handelt es sich um einen Ringpiezoaktor oder um drei symmetrisch um die Antriebswelle angeordnete Stapelaktoren.

Letztere Bauform ist kostengünstiger. Stapelaktoren haben grundsätzlich den Vorteil, dass bei geringer Steuerspannung große Stellwege erzielt werden können.

Die drei Stapelaktoren sind bevorzugt spiel- und reibungsfrei mittels Festkörpergelenken miteinander verbunden.

Die Festkörpergelenke erlauben lediglich einen Freiheitsgrad, nämlich in axialer Richtung, wodurch auf die Welle wirkende Kraftkomponenten quer zur Längsachse der Vorrichtung weitgehend ausgeschlossen sind und somit eine hohe Präzision sichergestellt ist.

Eine vorteilhafte Ausgestaltung der erfindungsgemäßen Antriebsvorrichtung sieht vor, den Axialantrieb, insbesondere den Piezo-Antrieb, auf einfache Weise axial vorzuspannen. Hierzu wird eine Federscheibe zwischen dem Axialantrieb und einem Gehäuseabschnitt der Antriebsvorrichtung unter Spannung angeordnet.

Insgesamt ist der Axialantrieb vorzugsweise für eine Schwingungsfrequenz von 0 bis 500 Hz, besonders bevorzugt von 100 bis 400 Hz und für eine Schwingungsamplitude von 0 bis 15 µm, besonders bevorzugt von 2 bis 10 µm ausgelegt. Dabei ist der Schwingungsantrieb vorzugsweise in der Lage, Axialkräfte von 0 bis 1000 N, besonders bevorzugt von 50 bis 600 N und am besten im Bereich zwischen 150 und 500 N aufzubringen.

In einer vorteilhaften Weiterbildung ist die Antriebswelle als Hohlwelle ausgebildet.

Auf diese Weise wird eine axiale Durchgangsöffnung zum Durchleiten eines Dielektrikums bereitgestellt, wodurch in Verbindung mit einer rohrförmigen Hohlelektrode die Spülung der Bohrung bei Bedarf unterstützt werden kann.

Weitere Aufgaben, Merkmale und Vorteile der Erfindung werden nachfolgend anhand eines Ausführungsbeispiels mit Hilfe der Zeichnungen näher erläutert.

Es zeigen:
- Fig. 1: ein erstes Ausführungsbeispiel der erfindungsgemäßen Antriebsvorrichtung in dreidimensionaler perspektivischer Darstellung,
- Fig. 2: die Antriebsvorrichtung gemäß Fig. 1 im Schnitt,
- Fig. 3: ein zweites Ausführungsbeispiel der erfindungsgemäßen Antriebsvorrichtung in dreidimensionaler perspektivischer Darstellung und
- Fig. 4: die Antriebsvorrichtung gemäß Fig. 3 im Schnitt.

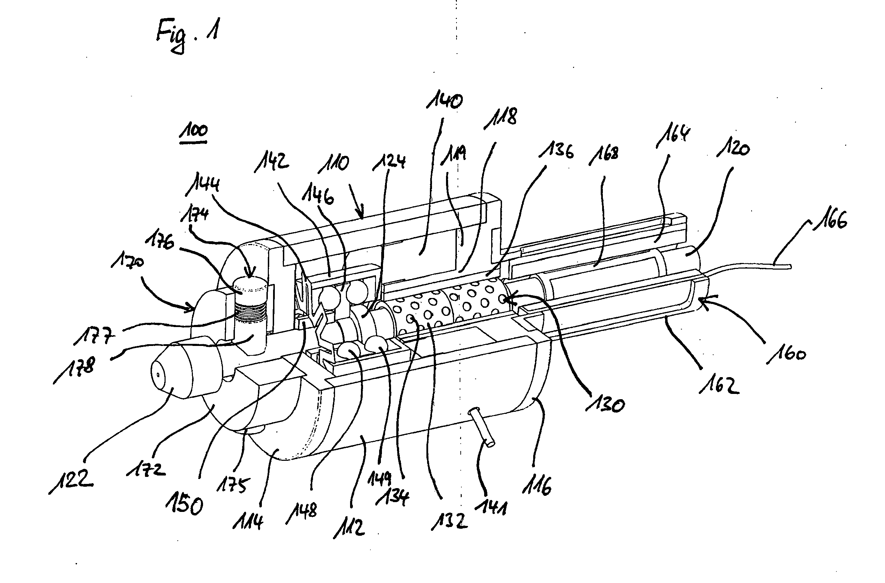

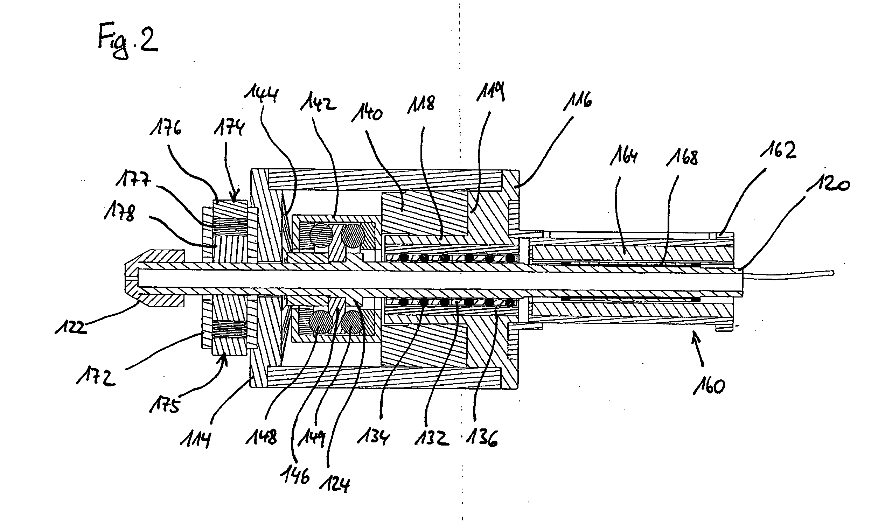

Die in den Figuren 1 und 2 gezeigte Antriebsvorrichtung 100 weist ein Gehäuse 110 mit einem zylindrischen Gehäusemantel 112 und zwei jeweils stirnseitig angeordneten Gehäuseabdeckungen 114 und 116 auf. In dem Gehäuse 110 ist koaxial eine Antriebswelle 120 gelagert, welche durch beide stirnseitigen Abdeckungen 114 und 116 aus dem Gehäuse 110 austritt. Die Antriebswelle weist an ihrem einen Ende eine Elektrodenaufnahme oder -halter 122 auf, in welche die Erodierelektrode (nicht dargestellt) eingespannt werden kann.

Die Welle ist in etwa in ihrem axialen Zentrum mittels einer Kugelführung 130 radial abgestützt. Die Kugelführung 130 besteht aus einem Kugelkäfig 132, in welchem mehrere Reihen umfänglich versetzt angeordnete Kugeln 134 unverlierbar aber leicht beweglich gehalten werden. Der Kugelkäfig ist vorzugsweise aus Kunststoff gefertigt, so dass die Kugeln abriebfrei in dem Käfig gelagert sind. Die Kugelführung 130 umfasst ferner eine zylindrische Buchse 136, in welcher der Kugelkäfig 132 mit den Kugeln 134 drehbar gelagert ist, wobei die Kugeln am Innenumfang der Buchse 136 anliegen bzw. abrollen. Die Buchse 136 ist in einem Lageraufnahmeabschnitt 118 der Gehäuseabdeckung 116 angeordnet und dort beispielsweise durch eine Presspassung fixiert.

Die Kugeln 134 liegen andererseits unmittelbar am Außenumfang der Antriebswelle 120 an. Sie rollen vorzugsweise unter Vorspannung kraftschlüssig zwischen der Welle 120 und der Buchse 136 und ermöglichen dabei sowohl eine Hubbewegung in axialer Richtung wie auch eine Drehbewegung mit größtmöglicher Präzision. Bei der Abstimmung der Vorspannung kommt es darauf an, dass einerseits eine hinreichende Spielfreiheit und andererseits eine hinreichende Leichtgängigkeit der Bewegung erzielt werden. Die benötigte Präzision zur Einstellung der Vorspannung wird durch eine hohe Form- und Maßgenauigkeit der Kugeln 134 und der Laufflächen auf der Welle 120 und in der Buchse 136 erzielt. Durch Feinstbearbeitung der Laufflächen wird die Reibung herabgesetzt und somit ein leichter, ruckfreier Lauf gewährleistet. Da die Paarung von Welle 120, Kugeln 134 bzw. Kugelkäfig 132 und Buchse 136 bereits für die notwendigen Lagereigenschaften sorgt, sind nur noch vergleichbar geringe Anforderungen an die Genauigkeit des Lageraufnahmeabschnitts 118 zu stellen, wodurch sich der Fertigungsaufwand für das Gehäuse 110 reduziert.

Durch die große axiale Ausdehnung können mehrere jeweils in einer Ebene senkrecht zur Wellenachse angeordnete Kugelreihen axial hintereinander angeordnet werden. Dadurch wird in axialer Richtung eine große Anzahl von Tragpunkten gebildet. Benachbarte Kugelreihen sind zudem in Umfangsrichtung versetzt angeordnet, wobei gemäß dem Ausführungsbeispiel aus Fig. 1 jede Kugelreihe die gleichen Anzahl von Kugeln aufweist und benachbarte Reihen jeweils um eine halbe Teilung, d.h. um den halben Winkelabstand zwischen zwei Kugeln in einer Reihe, zueinander versetzt sind. Hierdurch wird die höchste Kugeldichte erreicht, was eine möglichst gleichmäßige radiale Kraftverteilung und damit eine hohe Belastbarkeit des Lagers und Führungssteifigkeit der Welle bei kompakter Bauform des Lagers gewährleistet. Insbesondere wird dadurch, dass zu jeder Kugel 134 in dem Kugelkäfig 132 jeweils exakt gegenüberliegend eine Kugel angeordnet ist, eine hohe Führungssteifigkeit erreicht und die Einleitung von Querkräften vermieden.

Die Gehäuseabdeckung 116 umfasst ferner einen Aufnahmeabschnitt 119 für einen Axialantrieb 140. Der Axialantrieb 140 umgibt die Antriebswelle 120 ringförmig koaxial. Er ist ferner in demselben Axialabschnitt angeordnet, in welchem sich die Kugelführung 130 befindet und umgibt selbiges zumindest abschnittsweise. Auf diese Weise kann eine sehr kompakte, d.h. kurze Bauweise der Antriebsvorrichtung 100 erzielt werden. Der Axialantrieb 140 ist schematisch als Ringelement dargestellt. Er ist bevorzugt ein Piezo-Antrieb und kann sowohl als Ringpiezoaktor als auch als Anordnung mehrer, besonders bevorzugt dreier, symmetrisch um die Antriebswelle 120 angeordneter Stapelaktoren ausgebildet sein. Damit die drei Stapelaktoren keine Kippmomente in Bezug auf die Längsachse ausüben, ist die symmetrische Anordnung in 120°-Schritten notwendig. Bevorzugt sind zu demselben Zweck die Piezostapelaktoren spiel- und reibungsfrei mittels Festkörpergelenken (nicht dargestellt) miteinander verbunden.

Der Axialantrieb 140 ist kraftschlüssig einerseits über ein Axialkugellager 142 und eine Federscheibe 144 gegen die Gehäuseabdeckung 114 und andererseits unmittelbar an dem Aufnahmeabschnitt 119 der Gehäuseabdeckung 116 abgestützt. Durch eine entsprechende Wahl der Federscheibe 144 (oder eines anderen axial wirkenden Federelements) sowie eine axiale Abstandseinstellung der beiden Gehäuseabdeckungen 114 und 116, beispielsweise mittels Feingewinde in dem Gehäuse 110, kann eine benötigte Vorspannung auf den Axialantrieb eingestellt werden.

Um auch durch das Axialkugellager 142 möglichst keine Querkräfte in radialer Richtung auf die Welle auszuüben, ist es als reines Axiallager ausgelegt. In der gemäß Figuren 1 und 2 dargestellten Ausführungsform weist das Axialkugellager 142 einen axialen Stützring 146 auf, welcher zwischen zwei axial beabstandeten, parallelen Kugelreihen 148, 149 drehbar gelagert ist. Der axiale Stützring 146 liegt. einerseits an einem radial vorstehenden Bund 124 der Antriebswelle 120 und andererseits an einem auf der Antriebswelle 120 axial verschiebbaren Andrückring 150 (beispielsweise in Form einer Mutter) formschlüssig an. Einen radialen Formschluss zwischen der drehbaren Antriebswelle 120 und einen feststehenden Bauteil gibt es indes nicht, da der Stützring 146 in radialer Richtung frei ist.

Der Kraftschluss der Bewegung des Axialantriebes 140 erfolgt über das Axialkugellager 142, insbesondere über den axialen Stützring 146, und den Andrückring 150 auf die Weile 120. Die rückstellende Kraft wird spielfrei von der Federscheibe 144, das Axialkugellager 142, insbesondere den axialen Stützring 146 auf den Bund 124 der Welle 120 übertragen. Streng genommen ist die Federscheibe 144 (obgleich ein passives Bauelement) ein aktiver Teil des Axialantriebs.

Koaxial zu der Antriebswelle 120 und damit zu dem Gehäuse 110 ist auf der einen Seite des Gehäuses ein Rotationsantrieb 160 angeordnet. Dieser ist mit einem Motorengehäuse 162 an der Gehäuseabdeckung 116 der Antriebsvorrichtung 100 angeflanscht. Im Inneren des Motorengehäuses 162 ist der Stator 164 angeordnet, der bei dem bevorzugt verwendeten Synchronmotor stromführende Spulen aufweist. Die Spulen werden über eine Zuleitung 166 mit geeigneter Antriebsenergie versorgt. In dem das Motorengehäuse 162 durchsetzenden Axialabschnitt der Antriebswelle 120 ist der Rotor 168 mit der Antriebswelle 120 verbunden. Der Rotor besteht bevorzugt aus einer Magnetisierung der Antriebswelle durch auf der Antriebswelle ortsfest angebrachte Permanentmagnete. Bei diesem Antriebsprinzip wird die Antriebsenergie berührungsfrei und somit ohne Einleitung von Querkräften auf die Antriebswelle 120 eingebracht. Dabei wird die Masse der Antriebswelle nur durch die Permanentmagnete erhöht, was deren Resonanzfrequenz und der zur Erzeugung der axialen Vibration benötigten Kräfte zugute kommt. Ebenfalls günstig für die Resonanzfrequenz ist die kompakte Bauform, die eine sehr nahe Anordnung des Axialantriebs 140 einerseits und des Rotationsantriebs 160 andererseits an der Kugelführung 130 ermöglicht. Eine hohe Rundlaufpräzision kann so erreicht werden.

Auf der dem Rotationsantrieb 160 gegenüber liegenden Seite des Gehäuses 110 befindet sich die Erodierstromzuführung 170. Diese weist ein Anschlussgehäuse 172 auf, in welchem radial im Bezug auf die Antriebswelle 120 gegenüber liegende Anschlusselemente 174, 175 angeordnet sind. Die Anschlusselemente 174,175 weisen jeweils einen mit dem Anschlussgehäuse 172 verbundenen Einstellbolzen 176, eine gegen den Einstellbolzen 176 abgestützte Andrückfeder 177 und einen mittels der Andrückfeder 177 gegen die Antriebswelle 120 angedrückten Schleifkontakt 178 auf. Aufgrund der symmetrischen Anordnung beider Anschlussstücke 174, 175 lassen sich die jeweiligen Drücke so einstellen, dass in der Summe kein Radialkräfte auf die Antriebswelle 120 wirken und der Rundlauf der Welle nicht beeinträchtigt wird.

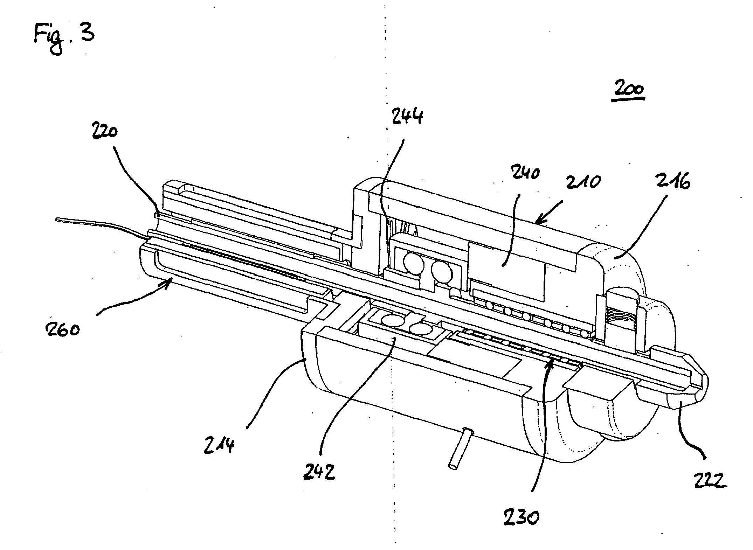

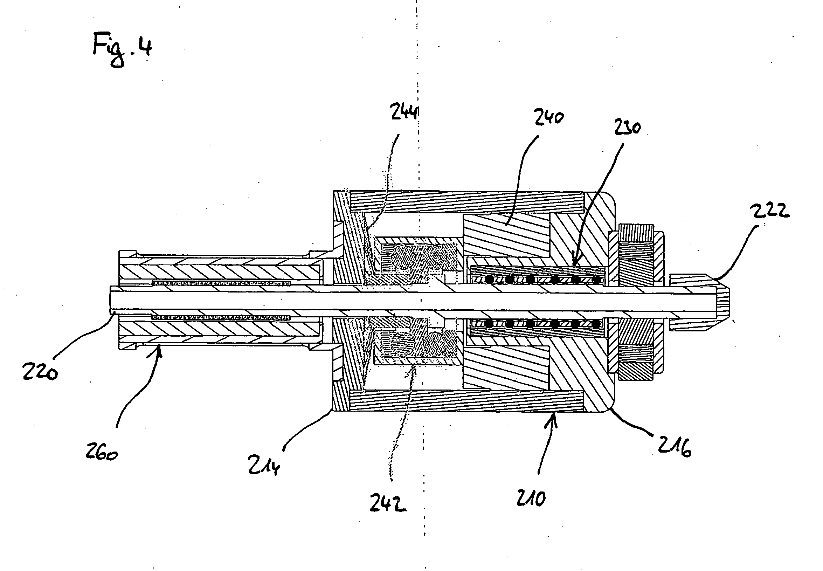

Die in den Figuren 3 und 4 gezeigte Ausführungsform der erfindungsgemäßen Antriebsvorrichtung unterscheidet sich von jener gemäß den Figuren 1 und 2 dadurch, dass der innere Gehäuseaufbau bestehend aus der Kugelführung 230, dem Axialantrieb 240, dem Axiallager 242, der Federscheibe 244 einschließlich beider Gehäuseabdeckungen 214, 216 in umgekehrter Reihenfolge mit Bezug auf die Längsachse angeordnet sind. Aus diesem Grund findet die radiale Abstützung der Antriebswelle 220 näher an dem Elektrodenhalter 222 statt, wodurch das freie Ende der Antriebswelle 220 auf der Seite der Elektrode kürzer ist und die Abstützung an diesem Ende somit steifer wird. Andererseits ist das freie Ende der Antriebswelle 220, an welchem sich der Rotationsantrieb 260 befindet, länger. Aus diesem Grund ist es bei dieser Bauform umso wichtiger, jegliche Querkräfte auf die Antriebswelle 220 verursacht durch den Rotationsantrieb 260 zu vermeiden, um einen ruhigen Rundlauf der gesamten Antriebsvorrichtung 200 sicherzustellen. Alle übrigen Komponenten der Antriebsvorrichtung 200 entsprechen jenen des ersten Ausführungsbeispiels gemäß Fig. 1 und 2.

### Bezugszeichenliste

- 100: Antriebswelle
- 110: Gehäuse
- 112: Gehäusemantel
- 114: Gehäuseabdeckung
- 116: Gehäuseabdeckung
- 118: Lageraufnahmeabschnitt
- 119: Aufnahmeabschnitt für Axialantrieb
- 120: Antriebswelle
- 122: Elektrodenaufnahme
- 124: Bund

- 130: Kugelführung
- 132: Kugelkäfig
- 134: Kugeln
- 136: Buchse

- 140: Axialantrieb
- 141: Zuleitung
- 142: Axial(kugel)lager
- 144: Federscheibe
- 146: Axialstützring
- 148: Kugelreihe
- 149: Kugelreihe
- 150: Andrückring (Mutter)

- 160: Rotationsantrieb
- 162: Motorgehäuse
- 164: Stator
- 166: Zuleitung
- 168: Rotor

- 170: Erodierstromzuleitung
- 172: Anschlussgehäuse
- 174: Anschlusselement
- 175: Anschlusselement
- 176: Einstellbolzen
- 177: Andrückfeder
- 178: Schleifkontakt

## Patentansprüche

1. Antriebsvorrichtung (100, 200) für Erodierwerkzeuge mit einer Antriebswelle (120), einem mit der Antriebswelle (120) verbundenen Elektrodenhalter, einem auf die Antriebswelle (120) wirkenden Axialantrieb (140), einem als Direktantrieb berührungslos auf die Antriebswelle wirkenden Rotationsantrieb (160) und einem Radiallager **dadurch gekennzeichnet,**
**dass** das Radiallager in Form einer Kugelführung (130) ausgebildet ist, wobei der Axialantrieb die Kugelführung (130) zumindest in einem Axialabschnitt umgibt.

2. Ahtriebsvornchtung (100, 200) nach Anspruch 1, **dadurch gekennzeichnet,**
**dass** die Kugelführung (130) einen Kugelkäfig (132) mit mehreren Reihen umfänglich versetzt angeordneter Kugeln (134) aufweist.

3. Antriebsvorrichtung (100, 200) nach Anspruch 2, **dadurch gekennzeichnet,**
**dass** die Kugeln (134) der Kugelführung (130) unmittelbar am Außenumfang der Antriebswelle (120) anliegen.

4. Antriebsvorrichtung (100, 200) nach Anspruch 2 oder 3, **dadurch gekennzeichnet,**
**dass** der Kugelkäfig (132) aus Kunststoff besteht.

5. Antriebsvorrichtung (100, 200) nach einem der Ansprüche 2 bis 4, **dadurch gekennzeichnet**,
die Kugelführung (130) eine Buchse (136) aufweist, an deren Innenumfang die Kugeln (134) anliegen.

6. Antriebsvorrichtung (100, 200) nach einem der vorstehenden Ansprüche, **dadurch gekennzeichnet, dass** der Direktantrieb einen Synchronmotor aufweist, wobei die Antriebswelle (120) bevorzugt durch Permanentmagnete konstant magnetisiert ist.

7. Antriebsvorrichtung (100, 200) nach Anspruch 6, **dadurch gekennzeichnet,**
**dass** der Direktantrieb einen Torquemotor aufweist.

8. Antriebsvorrichtung(100, 200) nach einem der vorstehenden Ansprüche, **dadurch gekennzeichnet,**
**dass** der Axialantrieb (140) ringförmig ausgebildet ist und die Antriebswelle (120) umgibt.

9. Antriebsvorrichtung (100, 200) nach einem der vorstehenden Ansprüche, **dadurch gekennzeichnet,**
**dass** der Axialantrieb (140) ein Piezoantrieb ist.

10. Antriebsvorrichtung (100, 200) nach Anspruch 9, **dadurch gekennzeichnet,**
**dass** der Piezoantrieb einen Ringpiezoaktor aufweist.

11. Antriebsvorrichtung (100, 200) nach Anspruch 9, **dadurch gekennzeichnet,**
**dass** der Piezoantrieb drei symmetrisch um die Antriebswelle (120) angeordnete Stapelaktoren aufweist.

12. Antriebsvorrichtung (100, 200) nach Anspruch 11, **dadurch gekennzeichnet,**
**dass** die drei Stapelaktoren spiel- und reibungsfrei mittels Festkörpergelenken verbunden sind.

13. Antriebsvorrichtung (100, 200) nach einem der vorstehenden Ansprüche, **gekennzeichnet durch**
eine Federscheibe (144), welche zwischen dem Axialantrieb (140) und eidem Gehäuseabschnitt unter Spannung angeordnet ist und den Axialantrieb (140) axial vorspannt.

14. Antriebsvorrichtung (100, 200) nach einem der vorstehenden Ansprüche, **dadurch gekennzeichnet,**
**dass** die Antriebswelle (120) als Hohlwelle ausgebildet ist.

## Claims

1. Drive device (100, 200) for erosion tools, having a drive shaft (120), an electrode holder connected to the drive shaft (120), an axial drive (140) which acts on the drive shaft (120), a rotary drive (160) which acts on the drive shaft as a direct drive without contact, and a radial bearing, **characterised in that**
the radial bearing is in the form of a ball guide (130), the axial drive surrounding the ball guide (130) at least in an axial portion.

2. Drive device (100, 200) according to claim 1, **characterised in that**
the ball guide (130) has a ball cage (132) with a plurality of rows of balls (134) which are arranged offset on the periphery.

3. Drive device (100, 200) according to claim 2, **characterised in that**
the balls (134) of the ball guide (130) rest directly on the outer periphery of the drive shaft (120).

4. Drive device (100, 200) according to claim 2 or 3, **characterised in that**
the ball cage (132) is made of plastic.

5. Drive device (100, 200) according to any one of claims 2 to 4, **characterised in that**
the ball guide (130) has a bushing (136) on the inner periphery of which the balls (134) rest.

6. Drive device (100, 200) according to any one of the preceding claims, **characterised in that** the direct drive has a synchronous motor, the drive shaft (120) preferably being constantly magnetised by permanent magnets.

7. Drive device (100, 200) according to claim 6, **characterised in that**
the direct drive has a torque motor.

8. Drive device (100, 200) according to any one of the preceding claims, **characterised in that**
the axial drive (140) is of annular form and surrounds the drive shaft (120).

9. Drive device (100, 200) according to any one of the preceding claims, **characterised in that**
the axial drive (140) is a piezo drive.

10. Drive device (100, 200) according to claim 9, **characterised in that**
the piezo drive has an annular piezo actuator.

11. Drive device (100, 200) according to claim 9, **characterised in that**
the piezo drive has three stack actuators arranged symmetrically around the drive shaft (120).

12. Drive device (100, 200) according to claim 11, **characterised in that**
the three stack actuators are connected in a play-free and frictionless manner by means of solid joints.

13. Drive device (100, 200) according to any one of the preceding claims, **characterised by**
a spring disk (144) which is arranged under tension between the axial drive (140) and a housing portion and which biases the axial drive (140) axially.

14. Drive device (100, 200) according to any one of the preceding claims, **characterised in that**
the drive shaft (120) is in the form of a hollow shaft.

## Revendications

1. Dispositif d'entraînement (100, 200) pour des outils d'érosion, comprenant un arbre d'entraînement (120), un porte-électrode relié à l'arbre d'entraînement (120), un entraînement axial (140) agissant sur l'arbre d'entraînement (120), un entraînement rotatif (160) agissant sans contact sur l'arbre d'entraînement en tant qu'entraînement direct, ainsi qu'un palier radial, **caractérisé en ce que**
le palier radial est conçu sous la forme d'une glissière à billes (130), l'entraînement axial encerclant la glissière à billes (130), tout au moins dans une section axiale.

2. Dispositif d'entraînement (100, 200) selon la revendication 1, **caractérisé en ce que**
la glissière à billes (130) présente une cage à billes (132) avec plusieurs rangées de billes (134) disposées en décalage au niveau de la périphérie.

3. Dispositif d'entraînement (100, 200) selon la revendication 2, **caractérisé en ce que**
les billes (134) de la glissière à billes (130) sont placées directement adjacentes à la périphérie extérieure de l'arbre d'entraînement (120).

4. Dispositif d'entraînement (100, 200) selon la revendication 2 ou 3, **caractérisé en ce que**
la cage à billes (132) est composée de matière plastique.

5. Dispositif d'entraînement (100, 200) selon l'une des revendications 2 à 4, **caractérisé en ce que**
la glissière à billes (130) présente une gaine (136), dans la périphérie interne de laquelle sont placées les billes (134).

6. Dispositif d'entraînement (100, 200) selon l'une des revendications précédentes, **caractérisé en ce que**
l'entraînement direct présente un moteur synchrone, l'arbre d'entraînement (120) étant constamment magnétisé, de préférence par des aimants permanents.

7. Dispositif d'entraînement (100, 200) selon la revendication 6, **caractérisé en ce que**
l'entraînement direct présente un moteur couple.

8. Dispositif d'entraînement (100, 200) selon l'une des revendications précédentes, **caractérisé en ce que**
l'entraînement axial (140) est conçu en forme d'anneau et entoure l'arbre d'entraînement (120).

9. Dispositif d'entraînement (100, 200) selon l'une des revendications précédentes, **caractérisé en ce que**
l'entraînement axial (140) est un entraînement piézoélectrique.

10. Dispositif d'entraînement (100, 200) selon la revendication 9, **caractérisé en ce que**
l'entraînement piézoélectrique présente un actionneur piézoélectrique en anneau.

11. Dispositif d'entraînement (100, 200) selon la revendication 9, **caractérisé en ce que**
l'entraînement piézoélectrique présente trois actionneurs qui sont empilés et disposés symétriquement autour de l'arbre d'entraînement (120).

12. Dispositif d'entraînement (100, 200) selon la revendication 11, **caractérisé en ce que**
les trois actionneurs empilés sont reliés sans aucun jeu ni frottement au moyen d'articulations à corps solide.

13. Dispositif d'entraînement (100, 200) selon l'une des revendications précédentes, **caractérisé en ce que**
un ressort à disque (144), lequel est disposé sous tension entre l'entraînement axial (140) et une section de boîtier et sollicite l'entraînement axial (140) de manière axiale.

14. Dispositif d'entraînement (100, 200) selon l'une des revendications précédentes, **caractérisé en ce que**
l'arbre d'entraînement (120) est conçu comme un arbre creux.
